# DEMANDE DE BREVET EUROPEEN

(11) **EP 0 534 861 A1**
(43) Date de publication de la demande: **31.03.1993**
(21) Numéro de dépôt: 92402639.6
(22) Date de dépôt: 25.09.1992
(51) Int. Cl.: B01D 61/56, B01D 35/06, C02F 11/12

(54) **Cellule et appareil industriel de deshydratation par électroosmose**

(30) Priorité: 27.09.1991 FR 9111917
(71) Demandeur: ELECTRICITE DE FRANCE Service National, F-75008 Paris (FR); ELMETHERM, F-87310 Saint Laurent sur Gorre (FR)
(72) Inventeur: Damien, Alain, F-95150 Taverny (FR); Lenfant, Jean-Pierre, F-87600 Rochechouart (FR)
(74) Mandataire: Martin, Jean-Jacques

(57) **Abrégé**

Cellule (10) de déshydratation par électroosmose d'un produit (11) constitué par une suspension de particules solides dans un liquide.

Selon l'invention, ladite cellule comporte une cuve (100) contenant ledit produit, ouverte en partie supérieure ; une première électrode (200) verticale, munie d'une paroi poreuse d'électroosmose ; une deuxième électrode (300) verticale de signe opposé à ladite première électrode, également munie d'une paroi poreuse d'électroosmose ; et un moyen (400) de déplacement relatif de ladite première électrode et de ladite deuxième électrode, apte à maintenir ledit produit à un niveau (12) constant dans ladite cuve (100) pendant toute la durée de l'opération de déshydratation.

Application à la déshydratation de produits à structure colloïdale contenant des substances nutritives, telles que des protéines.

## Description

La présente invention concerne une cellule de déshydratation par électroosmose d'un produit constitué par une suspension de particules solides dans un liquide, lesdites particules solides présentant un potentiel électrocinétique P_{z} non nul par rapport audit liquide. Elle concerne également un appareil industriel comportant une pluralité de cellules selon l'invention.

L'invention trouve une application particulièrement avantageuse dans le domaine de la déshydratation de produits à structure colloïdale tels que les boues biologiques des stations d'épuration, et notamment les déchets d'abattoirs qui contiennent des substances nutritives, telles que des protéines. En effet, il est avantageux de récupérer de telles substances car elles peuvent être utilisées pour la production d'aliments pour animaux.

On connaît, de l'article paru dans Wat. Sci. Tech. Vol. 22 No. 12. pp. 259-269, 1990, un dispositif conforme au préambule permettant la déshydratation par électroosmose d'un produit sous pression. Ce dispositif est constitué d'une cellule fermée du type filtre presse, connue en soi, à laquelle a été incorporé un système de deux électrodes verticales d'électroosmose permettant ainsi la déshydratation par électroosmose du produit à traiter. Ce produit est introduit et maintenu sous pression dans ladite cellule pendant toute la durée de l'opération de déshydratation.

Toutefois, le dispositif connu de l'état de la technique ne permet pas d'obtenir un ajustement et un contrôle satisfaisants de la pression dudit produit en fonction de la différence de potentiel électrique appliquée entre les deux électrodes et de la durée désirée de l'opération de déshydratation. Ainsi, les deux paramètres précités étant fixés, une pression trop élevée entraîne une quantité trop importante de produit à l'intérieur de ladite cellule et l'eau récupérée par déshydratation du produit est polluée, de même une pression trop faible entraîne une quantité insuffisante de produit à l'intérieur de la cellule, qui se traduit par un rendement limité de l'installation du fait que la surface des électrodes n'est pas utilisée en totalité.

Aussi, le problème technique à résoudre par l'objet de la présente invention est de proposer une cellule conforme au préambule qui permettrait d'obtenir, en un temps relativement court, un produit présentant une siccité élevée après déshydratation, tout en éliminant les problèmes d'ajustement et de contrôle de la pression dudit produit lors de l'opération de déshydratation par électroosmose.

La solution au problème technique posé consiste, selon la présente invention, en ce que ladite cellule comporte :
- une cuve en U contenant ledit produit, ouverte en partie supérieure, sur un premier côté latéral et sur un deuxième côté latéral en regard dudit premier côté,
- une première électrode verticale, munie d'une paroi poreuse d'électroosmose et disposée sur ledit premier côté latéral de ladite cuve,
- une deuxième électrode verticale de signe opposé à ladite première électrode, également munie d'une paroi poreuse d'électroosmose et placée en regard de ladite première électrode sur ledit deuxième côté latéral de la cuve,
- un moyen de déplacement relatif de ladite première électrode et de ladite deuxième électrode, apte à maintenir ledit produit à un niveau constant dans ladite cuve pendant toute la durée de l'opération de déshydratation par électroosmose.

Ainsi, la cellule selon l'invention étant ouverte sur l'extérieur, l'opération de déshydratation par électroosmose se réalise à la pression atmosphérique et, de ce fait, les problèmes liés au maintien sous pression du produit à déshydrater sont éliminés. Avant toute opération de déshydratation, une quantité nécessaire dudit produit est introduite à la pression atmosphérique dans la cuve pour atteindre un niveau suffisant permettant de recouvrir lesdites électrodes sur toute leur surface. Ce niveau est, par la suite, maintenu constant, simplement en rapprochant les deux électrodes à mesure que l'eau contenue dans ledit produit disparaît auxdites électrodes de la cellule. Ainsi, le rendement maximum de l'installation peut être atteint car la surface des électrodes est utilisée en totalité.

Du fait de la configuration verticale des électrodes de la cellule de déshydratation conforme à l'invention, il peut se produire, notamment en fin de déshydratation, un assèchement de la partie supérieure de la paroi poreuse desdites électrodes, avec pour conséquence, un fonctionnement dégradé de ladite cellule car les parties asséchées jouent alors le rôle d'isolant électrique.

Aussi, de manière à éviter cette difficulté, il est particulièrement recommandé que ladite paroi poreuse comporte un tissu filtrant en matière hydrophile qui maintient de cette manière une humidité minimale pour que la paroi soit un bon conducteur électrique et, de ce fait, permette le fonctionnement normal de la cellule. D'autre part, afin de faciliter l'évacuation des gaz qui se forment par électrolyse lors de la déshydratation par électroosmose, ladite paroi poreuse comporte également un feutre isolant qui peut être de la même façon en matière hydrophile.

Dans un mode de réalisation d'une cellule de déshydratation conforme à l'invention, le moyen de déplacement relatif de ladite première électrode et de ladite deuxième électrode est un vérin fixé à l'une desdites électrodes. De plus, ce vérin comporte un moyen d'asservissement, à un niveau constant, du niveau de produit dans la cuve, le contrôle du niveau dudit produit étant réalisé au moyen de capteurs de niveau tels que des capteurs optiques ou à ultrasons. D'autre part, il y a avantage à ce que la cellule de déshydratation selon l'invention comporte un moyen de décollement du produit formé après déshydratation à l'électrode du signe opposé audit potentiel électrocinétique P_{z}. A titre d'exemple non limitatif, le moyen de décollement du produit après déshydratation est un injecteur d'air comprimé.

Ainsi, lorsque l'opération de déshydratation est terminée, les deux électrodes sont séparées par l'intermédiaire dudit vérin et le produit obtenu après déshydratation est facilement récupéré à l'électrode de signe opposé audit potentiel électrocinétique P_{z}. En injectant sur cette électrode de l'air comprimé, le produit déshydraté se décolle et tombe dans un récipient déposé en dessous de la cellule conforme à l'invention.

Une application de la cellule de déshydratation selon l'invention est la réalisation d'un appareil industriel permettant la déshydratation par électroosmose à grande échelle de produits à traiter tels que des boues biologiques de stations d'épuration ou des déchets d'abattoirs. Selon l'invention, l'appareil de déshydratation par électroosmose comporte une pluralité de cellules conformes à l'invention, alignées suivant un axe longitudinal, et un moyen commun de déplacement relatif, suivant ledit axe longitudinal des premières et deuxièmes électrodes, couplé à un moyen de transmission dudit déplacement relatif à chacune desdites cellules.

Ainsi, cet appareil permet d'obtenir un débit de produit déshydraté, à l'échelle industrielle, nettement supérieur à celui d'une cellule unique conforme à l'invention utilisée plutôt en laboratoire à des fins expérimentales.

D'autres caractéristiques et avantages relatifs à la cellule et à l'appareil de déshydratation conforme à l'invention seront maintenant donnés à la lecture de la description suivante, en regard des dessins annexés fournis à titre d'exemples non limitatifs.
- La figure 1 est une vue en perspective d'une cellule de déshydratation selon l'invention.
- La figure 2 est une vue en coupe, selon le plan P₁, de la cellule de la figure 1.
- La figure 3 est le schéma d'un premier mode de réalisation de l'appareil de déshydratation comportant des cellules selon l'invention.
- La figure 4 est le schéma d'un deuxième mode de réalisation de l'appareil de déshydratation comportant des cellules selon l'invention.

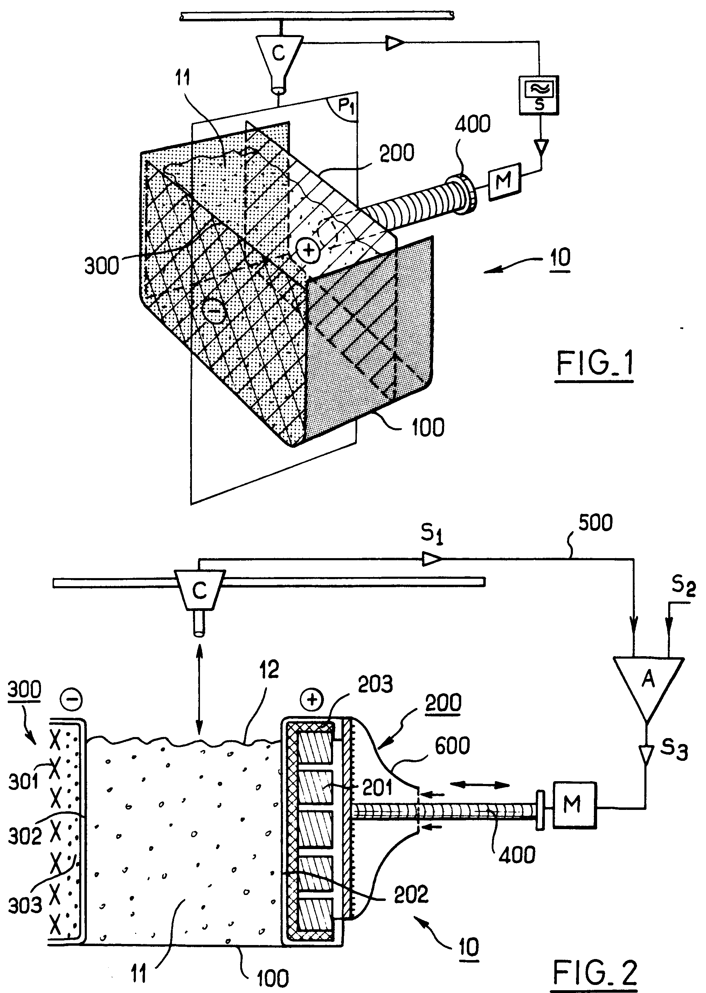

Les figures 1 et 2 montrent respectivement en perspective et en coupe une cellule 10 de déshydratation par électroosmose à électrodes 200, 300 verticales. Cette cellule est destinée à déshydrater un produit 11 constitué par une suspension de particules solides dans un liquide, lesdites particules solides présentant un potentiel électrocinétique P_{z} non nul par rapport audit liquide. Le potentiel électrocinétique P_{z} ou potentiel zéta du produit 11 sera pris, à titre d'exemple, de signe négatif. Comme on peut le voir sur les figures 1 et 2, la cellule 10 comporte une cuve 100 en U contenant ledit produit 11, ouverte en partie supérieure, sur un premier côté latéral et sur un deuxième côté latéral en regard dudit premier côté. Sur ledit premier côté latéral est disposée une première électrode 200 verticale, ici une anode. Dans le mode de réalisation montré à la figure 2, cette anode 200 est constituée d'une plaque de graphite perforée 201 et est munie d'une paroi poreuse comportant d'une part un tissu filtrant 202 et un feutre isolant 203. De même, comme le montrent les figures 1 et 2, une deuxième électrode 300, ici une cathode, est placée sur ledit deuxième côté latéral de la cuve 100. La figure 2 montre, de manière plus détaillée, que cette cathode est constituée d'une tôle d'acier inoxydable déployée 301 et est munie également d'une paroi poreuse constituée d'un tissu filtrant 302 et d'un feutre isolant 303.

Selon l'invention, le tissu filtrant 202, 302 est destiné à laisser passer l'eau qui migre, ici, vers la cathode au cours de l'opération d'électroosmose. De même, les feutres 203, 303 permettent de faciliter l'évacuation des gaz formés par électrolyse auxdites électrodes.

De plus, il y a avantage à ce que les tissus filtrants 202, 302, ainsi que les feutres 203, 303, soient réalisés en matière hydrophile de manière à éviter, du fait de la configuration verticale des électrodes, l'assèchement éventuel de la partie supérieure de ladite paroi poreuse, notamment en fin de déshydratation. Les parties asséchées jouant alors le rôle d'isolant électrique, il est observé une dégradation du fonctionnement de ladite cellule.

Ainsi, la matière hydrophile permet de maintenir une humidité minimale pour que ladite paroi poreuse soit toujours un bon conducteur électrique pour un fonctionnement normal de la cellule. Pour plus de sécurité dans le fonctionnement de la cellule, il est possible d'humidifier, par apport extérieur, la matière hydrophile afin d'augmenter les capacités de conductivité de la paroi poreuse.

Par ailleurs, la cellule 10 montrée aux figures 1 et 2 comporte un moyen 400 de déplacement relatif, ici un vérin, de l'anode 200 et de la cathode 300, de manière à maintenir le produit 11 à un niveau 12 constant dans la cuve 100 pendant toute la durée de l'opération de déshydratation. Comme on peut le voir sur les figures 1 et 2, ledit vérin 400 comporte un moyen d'asservissement 500, à un niveau constant, du niveau 12 de produit dans la cuve. Ce moyen d'asservissement 500 fonctionne de la manière suivante.

Un capteur C de niveau, par exemple un capteur optique ou à ultrasons, enregistre un signal S₁ représentatif du niveau 12 du produit 11 au cours de l'opération de déshydratation. Ce signal S₁ est appliqué à un amplificateur différentiel A qui compare ledit signal S₁ à un signal S₂ de référence représentatif du niveau 12 initial du produit 11 dans la cuve 100 avant mise en fonctionnement de la cellule. Ledit amplificateur différentiel A délivre un signal S₃ d'erreur qui commande le circuit d'alimentation d'un moteur M d'entraînement du vérin 400. Ledit moteur M actionne alors le vérin 400 qui rapproche les deux électrodes 200 et 300 jusqu'à annuler ledit signal S₃ d'erreur.

Ainsi, le niveau 12 du produit 11 est maintenu constant tout au long de l'opération de déshydratation.

D'autre part, la figure 2 montre que la cellule 10 est munie d'un injecteur 600 d'air comprimé constituant un moyen de décollement du produit 11 après déshydratation formé, ici, à l'anode. Ainsi, ledit produit 11 peut être récupéré plus facilement en fin d'opération.

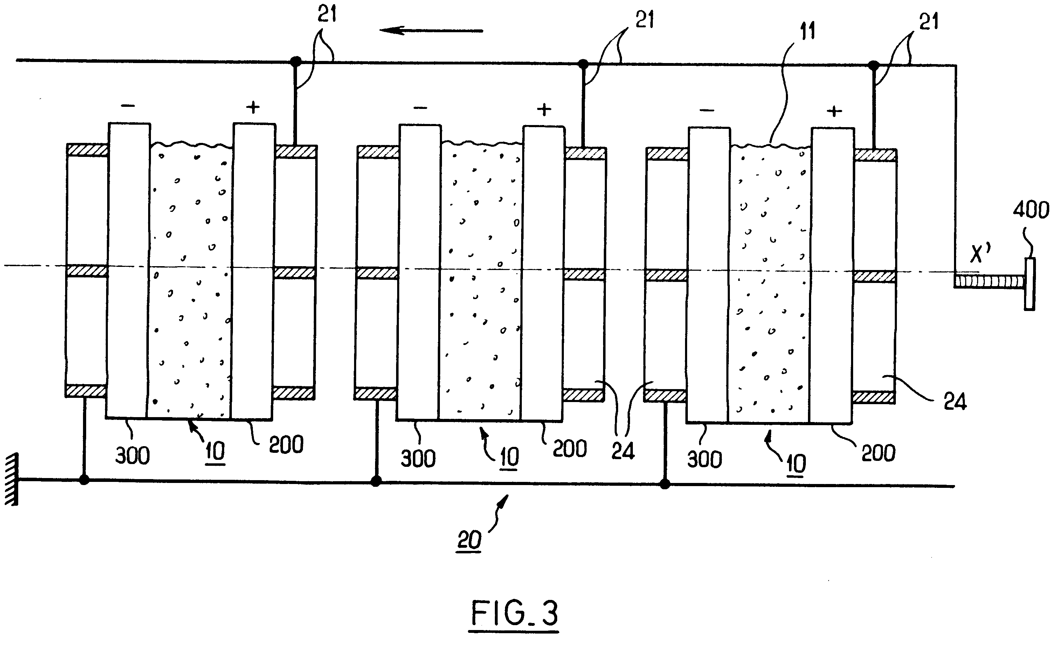

La figure 3 montre un premier mode de réalisation de l'appareil de déshydratation comportant une pluralité de cellules selon l'invention. Dans ce premier mode de réalisation, l'appareil industriel 20 comporte, alignées suivant un axe longitudinal XX′, une pluralité de cellules 10, telles que décrites en regard des figures 1 et 2, placées en série. L'ensemble des premières électrodes 200, ici anodes, est relié à un moyen de transmission constitué par une pluralité d'organes 21 de liaison rigides, couplé à un moyen commun de déplacement, tel qu'un vérin 400, de manière à les rendre solidairement mobiles le long dudit axe longitudinal XX′, les deuxièmes électrodes 300, ici cathodes, étant fixes.

Comme on peut le voir sur la figure 3, deux cellules 10 consécutives sont séparées par un espace vide relativement grand nécessité par le renforcement des faces planes 24 supportant les électrodes afin de s'opposer à la pression du produit à déshydrater, et, de ce fait, l'appareil présente un encombrement important par rapport à la quantité de produit 11 à déshydrater.

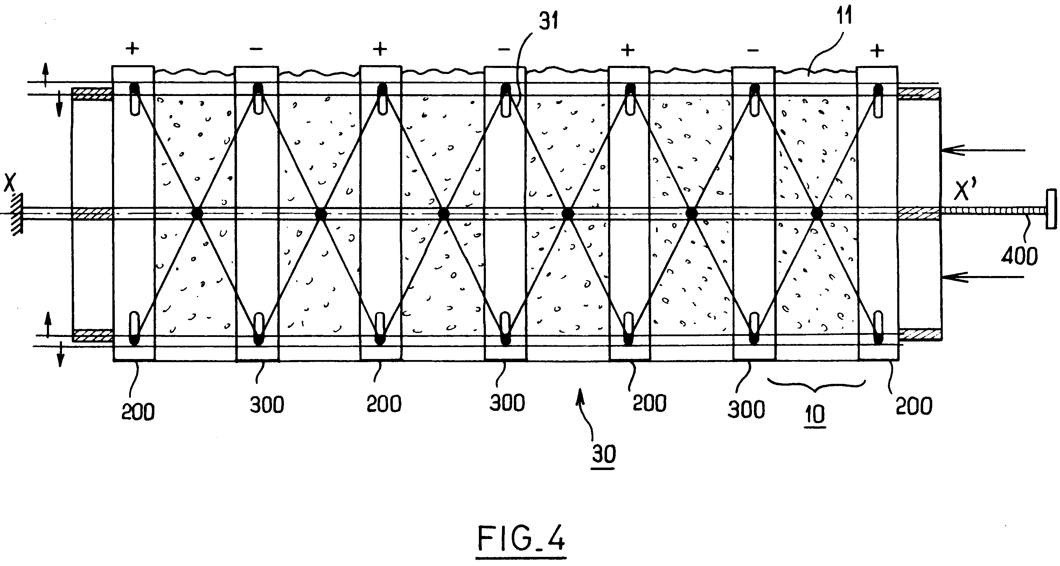

Afin de remédier à l'inconvénient précité, il est proposé en référence à la figure 4 un deuxième mode de réalisation de l'appareil de déshydratation selon l'invention. Dans ce deuxième mode de réalisation, l'appareil industriel 30 comporte, alignées suivant un axe longitudinal XX′, une pluralité de cellules 10, telles que décrites en regard des figures 1 et 2, placées successivement tête-bêche. Chacune des électrodes 200, 300 intermédiaires est commune à deux cellules 10 consécutives et l'ensemble desdites électrodes est relié à un moyen de transmission, ici un système 31 de parallélogrammes déformables, de manière à les rendre solidairement mobiles le long dudit axe longitudinal XX′. Le système 31 de parallélogrammes déformables ayant une première extrémité reliée à un moyen commun de déplacement 400, ici un vérin, et une deuxième extrémité fixe.

Ainsi, cet appareil ne comporte pas de volumes vides, chaque espace entre deux électrodes 200, 300 consécutives contient le produit 11 à déshydrater et, de ce fait, l'encombrement dudit appareil 30 est minimal pour une quantité de produit 11 donnée.

Il convient de préciser que le remplissage en produit 11 des appareils industriels montrés sur les figures 3 et 4 s'effectue au moyen d'une tuyauterie principale d'arrivée qui est équipée d'une pluralité de vannes pilotées par des contrôleurs de niveau respectifs, chacune des vannes correspondant à une cellule de l'appareil. De plus, afin de permettre l'écoulement des eaux évacuées par électroosmose, un tapis de récupération des produits séchés est disposé en pente sous les appareils industriels montrés sur les figures 3 et 4. L'eau s'évacue alors par gravité jusqu'à l'extrémité d'un convoyeur, dans un caniveau, le sens de fonctionnement du tapis de récupération étant opposé à la pente pour l'évacuation des produits déshydratés.

## Revendications

1. Cellule (10) de déshydratation par électroosmose d'un produit (11) constitué par une suspension de particules solides dans un liquide, lesdites particules solides présentant un potentiel électrocinétique P_{Z} non nul par rapport audit liquide, caractérisée en ce que ladite cellule (10) comporte :
- une cuve (100) en U contenant ledit produit (11), ouverte en partie supérieure, sur un premier côté latéral et sur un deuxième côté latéral en regard dudit premier côté,
- une première électrode (200) verticale, munie d'une paroi poreuse d'électroosmose et disposée sur ledit premier côté latéral de ladite cuve (100),
- une deuxième électrode (300) verticale de signe opposé à ladite première électrode (200), également munie d'une paroi poreuse d'électroosmose et placée en regard de ladite première électrode (200) sur ledit deuxième côté latéral de la cuve (100),
- un moyen (400) de déplacement relatif de ladite première électrode (200) et de ladite deuxième électrode (300), apte à maintenir ledit produit (11) à un niveau (12) constant dans ladite cuve (100) pendant toute la durée de l'opération de déshydratation par électroosmose.

2. Cellule de déshydratation selon la revendication 1, caractérisée en ce que ladite paroi poreuse comporte un tissu filtrant (202, 302) en matière hydrophile.

3. Cellule de déshydratation selon la revendication 2, caractérisée en ce que ladite paroi poreuse comporte également un feutre isolant (203, 303).

4. Cellule de déshydratation selon l'une quelconque des revendications 1 à 3, , caractérisée en ce que ledit moyen (400) de déplacement relatif comporte un moyen (500) d'asservissement, à un niveau constant, du niveau de produit dans la cuve.

5. Cellule de déshydratation selon l'une quelconque des revendications 1 à 4, caractérisée en ce que le moyen (400) de déplacement relatif de ladite première électrode (200) et de ladite deuxième électrode (300) est un vérin fixé à l'une desdites électrodes (200, 300).

6. Cellule de déshydratation selon l'une quelconque des revendications 1 à 5, caractérisée en ce qu'elle comporte un moyen (600) de décollement du produit formé, après déshydratation, à l'électrode du signe opposé audit potentiel électrocinétique P_{z}.

7. Cellule de déshydratation selon la revendication 6, caractérisée en ce que le moyen (600) de décollement du produit après déshydratation est un injecteur d'air comprimé.

8. Appareil industriel de déshydratation par électroosmose, caractérisé en ce qu'il comporte une pluralité de cellules (10) selon l'une quelconque des revendications 1 à 4, alignées suivant un axe longitudinal (XX′), et un moyen commun (400) de déplacement relatif, suivant ledit axe longitudinal, des premières et deuxièmes électrodes (200, 300), couplé à un moyen de transmission (21, 31) dudit déplacement relatif à chacune desdites cellules (10).

9. Appareil selon la revendication 8, comportant une pluralité de cellules placées en série, caractérisé en ce que ledit moyen de transmission est une pluralité d'organes (21) de liaison rigides reliés, d'une part, aux premières électrodes (200) de manière à ce qu'elles soient solidaires mécaniquement et, d'autre part, audit moyen commun (400) de déplacement le long dudit axe longitudinal (XX′), les deuxièmes électrodes (300) étant fixes.

10. Appareil selon la revendication 8, comportant une pluralité de cellules (10) placées successivement tête-bêche, caractérisé en ce que, chaque électrode (200, 300) intermédiaire étant commune à deux cellules (10) consécutives, ledit moyen de transmission est un système de parallélogrammes déformables (31) reliant l'ensemble desdites électrodes (200, 300) de manière à les rendre solidairement mobiles le long dudit axe longitudinal (XX′), ledit système de parallélogrammes ayant une première extrémité reliée audit moyen commun de déplacement (400) et une deuxième extrémité fixe.

11. Appareil selon l'une quelconque des revendications 8 à 10, caractérisé en ce que le moyen commun (400) de déplacement est un vérin.
